# EUROPEAN PATENT SPECIFICATION

(11) **EP 1 963 450 B1**
(45) Date of publication and mention of the grant of the patent: **22.10.2014**
(21) Application number: 06848132.4
(22) Date of filing: 22.12.2006
(51) Int. Cl.: C09J 4/00

(54) **ADHESIVE COMPOSITIONS FOR BONDING METALS**
HAFTZUSAMMENSETZUNGEN ZUR BINDUNG VON METALLEN
COMPOSITIONS ADHESIVES DESTINEES A LIER LES METAUX

(30) Priority: 22.12.2005 US 753310 P; 21.12.2006 US 643543
(43) Date of publication of application: 03.09.2008
(73) Proprietor: IPS CORPORATION, Compton, CA 90220 (US)
(72) Inventor: OSAE, Samuel, B., Cary, NC 27511 (US); BRIGGS, Paul, C., Chapel Hill, NC 27517 (US)
(74) Representative: Andrae | Westendorp Patentanwälte Partnerschaft
(86) International application number: PCT/US2006/049224
(87) International publication number: WO 2007/076108

(56) References cited:
- EP-A- 1 486 801
- GB-A- 2 125 420
- US-A- 4 507 429
- US-A- 4 714 730

## Description

### Background and A Preferred Embodiment

A preferred embodiment of this invention relates to two-part structural adhesive compositions, utilizing new and unique adhesion promoters, exhibiting improved adhesion to metals, as well as other important characteristics.

These adhesive compositions are mixtures of acrylate or methacrylate monomers and polymers that comprise at least the following components:
A. one or more acrylate or methacrylate ester monomers,
B. one or more soluble or dispersible polymers,
C. an acetylenic diol adhesion promoter, wherein the acetylenic diol is selected from the group consisting of 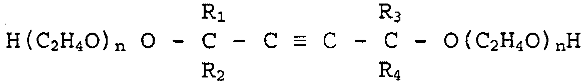 wherein R₁, R₂, R₃ and R₄ are selected from H and alkyl groups and wherein ₙ is equal to or greater than 0; 2-butyne-1,4-diol; 2,4,7,9-tetramethyl-5-decyne-4,7-diol; an ethoxylated 2-butyne-1,4-diol, and a polymerizable acidic adhesion promoter comprising an unsaturated phosphoric acid ester.

Other additives may also be added to the composition to enhance its performance.

GB-A-2 125 420 discloses a pressure sensitive adhesive comprising a polymer system which is formed by emulsion polymerizing an unsaturated ester, an unsaturated carboxylic acid and a polyfunctional unsaturated monomer in the presence of a stabilizer system comprising an ethoxylated acetylenic tertiary glycol and polyvinyl alcohol.

US-A-4 507 429 discloses a pressure sensitive adhesive composition comprising a polymer of an acrylate ester and/or vinyl ester, an olefinically unsaturated carboxylic acid comonomer, and a polyolefinically unsaturated copolymerizable monomer, the polymer being formed by an aqueous emulsion polymerization process in the presence of a stabilizer system comprising a hydroxypropyl methyl cellulose and an ethoxylated acetylenic tertiary diol.

EP-A-1 486 801 discloses a coating composition for forming a cured film between a plastic substrate and an antireflection film made of an inorganic oxide, which contains an organosilicon compound and an adhesion improver made of an acetylene compound.

In the course of evaluating the effects of traditional acidic adhesion promoters for bonding metallic substrates, it was surprisingly discovered that the addition of an acetylenic diol produced a marked improvement in the ability of the composition to bond to a variety of metals, even when conventional metal bonding adhesion promoters fail to provide the desired level of adhesion.

The acetylenic diol adhesion promoters of a preferred embodiment of this invention correspond to the general formula: 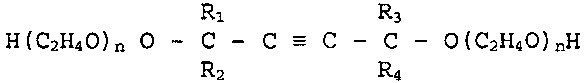 wherein R₁, R₂, R₃, and R₄ are selected from H and alkyl groups and wherein ₙ is equal to or greater than 0.

One group of preferred acetylenic diol adhesion promoters are disclosed by US Patent Nos. 4,650,543 and 3,268,593. An acetylenic diol adhesion promoter is 2-butyne-1,4-diol wherein R₁, R₂, R₃, and R₄ are all H and n = 0. Another acetylenic diol adhesion promoter, sold commercially as SURFYNOL^{®} 104 by Air Products and Chemicals, Inc., is 2,4,7,9-tetramethyl-5-decyne-4,7-diol, wherein R₁ and R₃ are methyl groups and R₂ and R₄ are isobutyl groups and n = 0. One important feature of the preferred acetylenic diols is the 2-butyne-1,4-diol backbone structure, wherein the hydroxyl groups are attached to the carbon atom adjacent to the acetylenic triple bond. Other particularly preferred acetylenic diol adhesion promoters include ethoxylated 2-butyne-1,4-diols, wherein the hydroxyl moiety is separated from the acetylenic carbon atom by one or more oxyethylene groups (n = 1 or more), such as SURFYNOL 485, which is an ethoxylated 2,4,7,9 tetramethyl-5-decyn-4,7 diol.

Conventionally, acetylenic diols are sold commercially as defoaming agents and surfactants for a wide variety of aqueous or waterborne applications, such as paints and coatings. Heretofore, their use in adhesives has been limited to waterborne compositions based on polymer emulsions and water-compatible additives. They are not recommended for use in organic coatings or adhesives when organic solvents or monomers are the primary liquid species in the composition. Even when acetylenic alcohols or diols are used in water-based compositions, their benefits are generally limited to effects deriving from their function as a defoamer or surfactant. Therefore, the significant improvement in adhesion to a variety of metallic surfaces by use of the compositions of preferred embodiments of invention was surprising.

While not intending to be bound by a specific theory, possible explanations for the beneficial effects from the use of the acetylenic diol adhesion promoters may derive from one or more of the theoretical explanations for metal adhesion. These theories include, but are not limited to, various electron donor-acceptor, hydrogen bonding or dipole-dipole interactive phenomena. In this sense, the acetylenic diols adhesion promoters have the potential to function in at least two ways, wherein either the electron donating capability of the acetylenic moiety, or the hydrogen bonding capability of the hydroxyl moieties, or both, can participate in the adhesion process. Evidence may be found in the fact that the olefinic or double bond analog of the preferred 2-butyne, 1,4-diol, namely 2-butene, 1,4-diol, wherein the triple bond of the structure above is replaced by a double bond, does not impart the inventive improvements. Similarly, the bis (acetate ester) of 2,butyne-1,4-diol does not impart the same inventive improvements. Thus, it is believed that the presence of at least one hydroxyl moiety and the triple bond are necessary to impart the desired improvements.

While the additives mentioned herein may be added to a composition as the sole adhesion promoter, they find particular utility in combination with other acidic adhesion promoters. The ability of acidic adhesion promoters to affect the bond strength of acrylate or methacrylate based structural adhesives to metals is known in the art. Traditional acidic adhesion promoters include unsaturated monocarboxylic acids, such as acrylic acid and methacrylic acid, unsaturated dicarboxylic acids such as maleic acid and fumaric acid, and unsaturated phosphoric acid esters such as mono- and bis- methacroyloxyethyl phosphate.

The factors influencing the ability of acrylate or methacrylate structural adhesives to bond metals are complex and interactive. They involve the catalytic or inhibitive effect of metallic surfaces and the acidic adhesion promoters on the reactivity of the adhesive composition as well as the effects of the specific metallic surfaces on the initial adhesion and durability of the bonds. For example, zinc and copper can either catalyze or inhibit the cure of an adhesive depending on the specific formulation. Iron oxide and aluminum oxide on ferrous and aluminum surfaces behave differently with respect to initial bond strength and durability of bonds.

Acrylic and methacrylic acids generally enhance the ability of acrylate and methacrylate structural adhesives to bond ferrous metals and generally increase their rate of cure. Maleic acid generally enhances adhesion to zinc surfaces, and unsaturated phosphoric acid esters generally enhance adhesion and durability of bonds to unprepared aluminum and stainless steel surfaces. Combinations of these acidic adhesion promoters can be used to formulate adhesives for specific applications and combinations of metallic and non-metallic materials.

One basis for a preferred embodiment of the current invention is that even when prior art metal adhesion promoters have been evaluated or incorporated in certain adhesive formulations, a specific formulation, even with certain other desirable characteristics, may not provide the desired level of adhesion to one or more metallic substrates. In such formulations, the addition of the preferred inventive acetylenic diol adhesion promoter can impart the desired improvements in metal adhesion. The specific improvements include, but are not limited to, increased bond strength and an increase in the desired cohesive failure mode over the less desirable adhesive failure mode, and preferably both. Cohesive failure is the mode of bond failure wherein upon separation of the bond in testing or in use, the failure occurs within the adhesive layer, leaving adhesive on both of the substrate pieces. In the adhesive failure mode, the adhesive separates cleanly from one of the substrate pieces, leaving no adhesive residue on that surface.

Detailed information concerning groups of adhesives to which this preferred inventive composition may be directed can be found in the US Patents 3,890,407, 4,182,644, 4,223,115, 4,536,546, 4,645,810, 4,714,730, 4,942,201, and a review of the subject by D.J. Damico, Engineered Materials Handbook, Volume 3, 119 ASM International, 1990.

For purpose of this discussion, the polymerizable vinyl, acrylate and methacrylate monomers include those disclosed in the '644 patent cited above; and the soluble or dispersible polymers include those disclosed in the '644 and '546 patents. The catalysts or initiating species include all of those generally recognized in the prior art including those described in the above cited references.

A composition of the current invention comprises:
A. 20 percent to 90 percent of a polymerizable acrylate or methacrylate ester monomer,
B. 10 percent to 60 percent of a soluble or dispersible polymer or mixture of polymers, and C. 0.1 percent to 10 percent of an acetylenic diol, wherein the acetylenic diol is preferably selected from 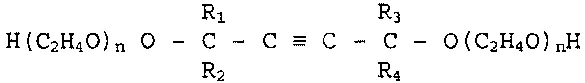 wherein R₁, R₂, R₃ and R₄ are selected from H and alkyl groups and wherein ₙ is equal to or greater than 0; 2-butyne-1,4-diol; 2,4,7,9-tetramethyl-5-decyne-4,7-diol; an ethoxylated 2-butyne-1,4-diol, and from 0.5 to 20% of an unsaturated phosphoric acid ester.

Other additives to enhance the performance of the composition can be added, as needed.

### EXAMPLES

The components used in the following examples are:

| **Component** | **Description** | **Supplier** |
|---|---|---|
| Methyl Methacrylate | Monomer | Lucite |
| Methacrylic Acid | Polymerizable carboxylic acid adhesion promoter | Lucite |
| Tyrin 3615 | Chlorinated polyethylene | duPont/Dow |
| Kraton D1155 | Thermoplastic SBS block copolymer | Kraton Polymers |
| Paraloid BTA | 753 MBS Core-shell impact modifier | Rohm & Haas |
| Phosphate ester CD-9052 | Polymerizable acidic adhesion promoter | Sartomer |
| 0.05% CuAcAc Solution | Copper acetyl acetonate solution in MMA | Lab prep/Aldrich |
| Reillcat ASY-2 | Dihydropyridine activator Component | Reilly Industries |
| 2-Butyne-4-diol | Inventive adhesion promoter | BASF |
| Surfynol^{®} | Inventive commercial adhesion promoters | Air Products |
| 2-Butyne-1,4-diol Aldrich | Comparative acetylenic | |
| diacetate | compound | |

| **Example** | **A** | **B** | **C** | **D** | **E** | **F** |
|---|---|---|---|---|---|---|
| **Components** | **Control** | | | | | |
| Methyl Methacrylate | 63.4 | 61.4 | 61.4 | 61.4 | 61.4 | 61.4 |
| Methacrylic Acid | 2.5 | 2.5 | 2.5 | 2.5 | 2.5 | 2.5 |
| Tyrin 3615 | 5 | 5 | 5 | 5 | 5 | 5 |
| Kraton D1155 | 5 | 5 | 5 | 5 | 5 | 5 |
| p-Toluenesulfonyl Chloride | 1.5 | 1.5 | 1.5 | 1.5 | 1.5 | 1.5 |
| Rohm & Haas BTA-753 | 20 | 20 | 20 | 20 | 20 | 20 |
| Phosphate Ester CD-9052 | 1.25 | 1.25 | 1.25 | 1.25 | 1.25 | 1.25 |
| 0.05% CuAcAc Solution | 0.1 | 0.1 | 0.1 | 0.1 | 0.1 | 0.1 |
| Reillcat ASY-2 | 1.25 | 1.25 | 1.25 | 1.25 | 1.25 | 1.25 |
| 2-Butyne-1,4-diol | - | 2 | - | - | - | - |
| Surfynol" 104 | - | - | 2 | - | - | - |
| Surfynol 485 | - | - | - | 2 | - | - |
| Surfynol 61 | - | - | - | - | 2 | - |
| 2-Butyne-1,4-diol diacetate | - | - | - | - | - | 2 |

| Acetylenic component features | | Inventive -Diol | Inventive -Diol | Inventive -Diol | Single OH Group | No -OH Group |
|---|---|---|---|---|---|---|
| **Results** | | | | | | |
| Aluminum Lap Shear Strength, | psi2112 | 2513 | 2308 | 2184 | 2048 | 2153 |
| ASTM D1002 | | | | | | |
| Failure Mode | Adhesive | Cohesive/Adh | Adhesive | Adhesive | Adhesive | Adhesive |

Example A is a control Example while the preferred inventive Examples include Examples B-D. These Examples, particularly Examples B and C, disclose improved adhesion for the compositions of preferred embodiments of the invention over compositions that do not include the inventive acetylenic diol component. However, these Examples place no limitations on the scope of the inventions disclosed herein.

## Claims

1. An adhesive composition, preferably an organic adhesive composition, comprising one or more acrylate or methacrylate ester monomers, one or more soluble or dispersible polymers, an acetylenic diol adhesion promoter, wherein the acetylenic diol is selected from the group consisting of 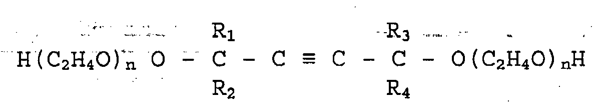 wherein R₁, R₂, R₃, and R₄ are selected from H and alkyl groups and wherein ₙ is equal to or greater than 0; 2-butyne-1,4-diol; 2,4,7,9-tetramethyl-5-decyne-4,7-diol; an ethoxylated 2-butyne-1,4-diol, and a polymerizable acidic adhesion promoter comprising an unsaturated phosphoric acid ester.

2. An organic adhesive composition comprising from 20 to 90% of a polymerizable acrylate or methacrylate ester monomer, from 10% to 60% of a soluble or dispersible polymer or mixture of polymers, from 0.1 to 10% of an acetylenic diol, wherein the acetylenic diol is preferably selected from 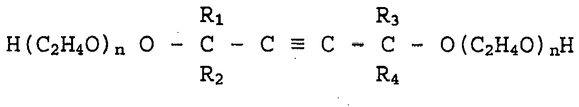 wherein R₁, R₂, R₃, and R₄ are selected from H and alkyl groups and wherein n is equal to or greater than 0; 2-butyne-1,4-diol; 2,4,7,9-tetramethyl-5-decyne-4,7-diol; and an ethoxylated 2-butyne-1,4-diol and from 0.5 to 20% of an unsaturated phosphoric acid ester.

3. A process of adhesively securing metallic substrates comprising
a) preparing the adhesive composition of Claim 1, and
b) securing the adhesive composition to metallic substrates.

## Patentansprüche

1. Haftzusammensetzung, bevorzugt organische Haftzusammensetzung, umfassend ein oder mehrere Acrylat- oder Methacrylatestermonomere, ein oder mehrere lösliche oder dispergierbare Polymere, einen acetylenisches Diol-Haftpromotor, wobei das acetylenische Diol aus der Gruppe ausgewählt ist, die aus 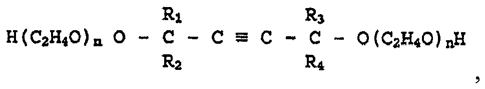 wobei R₁, R₂, R₃ und R₄ aus H und Alkylresten ausgewählt sind und wobei ₙ gleich oder größer als 0 ist; 2-Butin-1,4-diol; 2,4,7,9-Tetramethyl-5-decin-4,7-diol; einem ethoxylierten 2-Butin-1,4-diol besteht, und einen polymerisierbaren sauren Haftpromotor, der einen ungesättigten Phosphorsäureester umfasst.

2. Organische Haftzusammensetzung, umfassend 20 bis 90 % eines polymerisierbaren Acrylat- oder Methacrylatestermonomers, 10 % bis 60 % eines löslichen oder dispergierbaren Polymers oder Gemisches von Polymeren, 0,1 bis 10 % eines acetylenischen Diols, wobei das acetylenische Diol bevorzugt aus 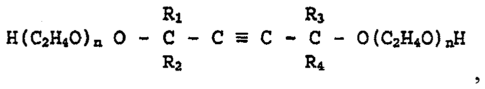 wobei R₁, R₂, R₃ und R₄ aus H und Alkylresten ausgewählt sind und wobei ₙ gleich oder größer als 0 ist; 2-Butin-1,4-diol; 2,4,7,9-Tetramethyl-5-decin-4,7-diol; und einem ethoxylierten 2-Butin-1,4-diol ausgewählt ist, und 0,5 bis 20 % eines ungesättigten Phosphorsäureesters.

3. Verfahren zum Aneinanderhaften von metallischen Substraten, umfassend
a) Herstellen der Haftzusammensetzung nach Anspruch 1, und
b) Anhaften der Haftzusammensetzung an metallischen Substraten.

## Revendications

1. Composition d'adhésifs, de préférence composition d'adhésifs organiques, comprenant un ou plusieurs monomères d'esters d'acrylate ou de méthacrylate, un ou plusieurs polymères solubles ou dispersibles, un promoteur d'adhérence à base de diol acétylénique dans lequel le diol acétylénique est sélectionné à partir du groupe se composant de 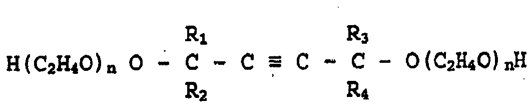 dans lequel R₁, R₂, R₃ et R₄ sont sélectionnés à partir des groupes H et alkyles et dans lequel la valeur de ₙ est égale ou supérieure à 0 ; de 2-butyne-1,4-diol ; de 2,4,7,9-tétraméthyl-5-décyne-4,7-diol ; d'un 2-butyne-1,4-diol éthoxylé et d'un promoteur d'adhérence polymérisable à base d'acide comprenant un ester d'acide phosphorique insaturé.

2. Composition d'adhésifs organiques comprenant de 20 % à 90 % d'un monomère d'ester d'acrylate ou de méthacrylate, de 10 % à 60 % d'un polymère soluble ou dispersible ou bien d'un mélange de polymères, de 0,1 % à 10 % d'un diol acétylénique dans lequel le diol acétylénique est sélectionné, de préférence, à partir du groupe se composant de 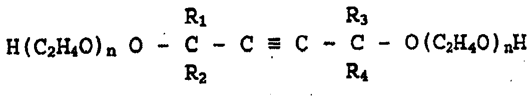 dans lequel R₁, R₂, R₃ et R₄ sont sélectionnés à partir des groupes H et alkyles et dans lequel la valeur de ₙ est égale ou supérieure à 0 ; de 2-butyne-1,4-diol ; de 2,4,7,9-tétraméthyl-5-décyne-4,7-diol ; d'un 2-butyne-l,4-diol éthoxylé et de 0,5 % à 20 % d'un ester d'acide phosphorique insaturé.

3. Procédé pour fixer de façon adhésive des substrats métalliques, consistant
a) à préparer la composition d'adhésifs de la revendication 1, et
b) à fixer la composition d'adhésifs sur des substrats métalliques.
